# EUROPÄISCHE PATENTSCHRIFT

(11) **EP 3 746 672 B1**
(45) Veröffentlichungstag und Bekanntmachung des Hinweises auf die Patenterteilung: **09.03.2022**
(21) Anmeldenummer: 19701573.8
(22) Anmeldetag: 18.01.2019
(51) Int. Cl.: F16D 65/12, F16D 69/04, F16D 55/28

(54) **TRÄGERSCHEIBENANORDNUNG FÜR BREMSANORDNUNG UND ELEKTROMAGNETISCH BETÄTIGBARE BREMSANORDNUNG MIT TRÄGERSCHEIBENANORDNUNG**
CARRIER DISC ASSEMBLY FOR BRAKE ASSEMBLY, AND ELECTROMAGNETICALLY ACTUATABLE BRAKE ASSEMBLY WITH CARRIER DISC ASSEMBLY
SYSTÈME DE DISQUES DE SUPPORT POUR UN SYSTÈME DE FREINAGE ET SYSTÈME DE FREINAGE POUVANT ÊTRE ACTIONNÉ ÉLECTROMAGNÉTIQUEMENT ÉQUIPÉ D'UN SYSTÈME DE DISQUES DE SUPPORT

(30) Priorität: 02.02.2018 DE 102018000839
(43) Veröffentlichungstag der Anmeldung: 09.12.2020
(73) Patentinhaber: SEW-EURODRIVE GmbH & Co. KG, 76646 Bruchsal (DE)
(72) Erfinder: HESSE, Kerstin, 76684 Östringen (DE); BECHTHOLD, Alex, 76707 Hambrücken (DE); RUHS, Christoph, 76344 Eggenstein-Leopoldshafen (DE); ESSERT, Steffen, 76646 Bruchsal (DE); ASCHOFF, Stefan, 76227 Karlsruhe (DE); STOBER, Martin, 76351 Linkenheim-Hochstetten (DE)
(86) Internationale Anmeldenummer: PCT/EP2019/025018
(87) Internationale Veröffentlichungsnummer: WO 2019/149447

(56) Entgegenhaltungen:
- EP-A1- 2 009 316
- DE-A1-102012 018 998
- DE-A1-102014 225 654
- DE-A1-102015 002 310
- GB-A- 1 433 090
- US-A- 5 612 110

## Beschreibung

Die Erfindung betrifft eine Trägerscheibenanordnung für eine Bremsanordnung und eine elektromagnetisch betätigbare Bremsanordnung mit einer Trägerscheibenanordnung.

Aus der DE 10 2015 122 200 A1 ist die Oberflächenbearbeitung mittels Laser bekannt.

**Aus der** DE 101 54 333 A1 **ist eine Radbremse bekannt.**

**Aus der** DE 10 2011 089 125 A1 **ist ein Bremskörper bekannt.**

**Aus der** US 2 580 869 A **ist als nächstliegender Stand der Technik ist eine elektromagnetisch betätigbare Kupplung bekannt.**

**Aus der** EP 0 626 228 A1 **sind Oberflächenkavitäten, also Vertiefungen in einer Oberfläche, bekannt.**

**Aus der** US 3 478 849 A **ist eine Scheibenbremse mit reduzierter Geräuschentwicklung bekannt.**

**Aus der** US 4 072 219 A **ist eine mehrteilig aufgebaute Scheibenbremse bekannt.**

**Aus der** DE 33 17 913 A **ist ein Bremsbelagträger für Teilbelag-Scheibenbremsen bekannt.**

**Aus der** US 5 143 184 A **ist eine Kohlenstoffkomposit-Bremse mit Geräuschdämpfung bekannt.**

**Aus der** US 5 823 301 A **sind Bremsbeläge bekannt.**

**Aus der** DE 20 2012 001 391 U1 **ist eine bedruckte Bremsscheibe für Fahrräder bekannt.**

**Aus der** US 2012 / 0 152 669 A1 **ist ein Bremsbelag für eine Scheibenbremse bekannt.**

**Aus der** AT 277 311 B **ist eine Bremsbacke mit Reibbelag bekannt.**

**Aus der** DE 10 2015 002310 A **ist als nächstliegender Stand der Technik eine Reiblamelle für eine reibschlüssige arbeitende Vorrichtung bekannt.**

**Aus der** US 5 612 110 A **ist eine Scheibe mit mehreren Schichten bekannt.**

**Aus der** DE 10 2014 225 654 A1 **ist ein Reibbelag bekannt.**

**Aus der** GB 1 433 090 A **ist eine Kohlenstoff enthaltende laminierte zusammengesetzte Bremsscheibe bekannt.**

**Aus der** EP 2 009 316 A1 **ist eine Bremsscheibe bekannt.**

**Aus der** DE 10 2012 018998 A1 **ist eine elektromagnetisch betätigbare Bremsanordnung bekannt.**

Der Erfindung liegt daher die Aufgabe zugrunde, einen Bremsbelagträger einer Bremsanordnung weiterzubilden.

Erfindungsgemäß wird die Aufgabe bei der Trägerscheibenanordnung nach den in Anspruch 1 **oder 2** und bei der Bremsanordnung nach den in Anspruch 15 angegebenen Merkmalen gelöst.

Wichtige Merkmale der Erfindung bei der Trägerscheibenanordnung für Bremsanordnung sind, dass die Trägerscheibenanordnung ein Nabenteil, zwei Reibbeläge und zwei Scheiben aufweist,
wobei die Scheiben mit dem Nabenteil verbunden sind, insbesondere mittels axial gerichteter Schrauben,
wobei eine erste der beiden Scheiben einen erste Vertiefungen aufweisenden Oberflächenbereich aufweist, insbesondere welcher auf der von der zweiten Scheibe abgewandten Seite der ersten Scheibe angeordnet ist,
wobei die zweite der beiden Scheiben ebenfalls einen erste Vertiefungen aufweisenden Oberflächenbereich aufweist, insbesondere welcher auf der von der ersten scheibe abgewandten Seite der zweiten Scheibe angeordnet ist,
wobei am Oberflächenbereich der ersten der beiden Scheiben ein erster Reibbelag aufgeklebt ist und/oder klebeverbunden ist mit der ersten Scheibe,
wobei am Oberflächenbereich der zweiten der beiden Scheiben ein zweiter Reibbelag aufgeklebt ist und/oder klebeverbunden ist mit der zweiten Scheibe,
Von Vorteil ist dabei, dass mittels der Vertiefungen eine verbesserte Haftung der Klebeverbindung erreichbar ist. Somit ist auch bei hohen Drehzahlen die Klebeverbindung stabil.

**Erfindungsgemäß** sind die ersten Vertiefungen mittels Laser hergestellt und/oder bearbeitet. Von Vorteil ist dabei, dass eine kostengünstige Bearbeitung mit hoher Genauigkeit erreichbar ist. Für die Vertiefungen ist eine definierte Formgebung ausführbar. Außerdem sind im Vergleich zu Sandstrahlen geringer umweltrelevanten Emissionen vorhanden.

Bei einer vorteilhaften Ausgestaltung sind die ersten Vertiefungen jeweils kreisförmig, quadratisch, nierenförmig oder rechteckförmig. Von Vorteil ist dabei, dass die ersten Vertiefungen jeweils gleichartig formbar sind. Bei einer punktförmigen Ausformung, also kreisförmigen Ausformung, ist zur Herstellung jeder der Vertiefungen nur ein Laserpuls oder eine Laserpulsfolge auf eine Stelle zu richten. Durch zur jeweiligen Scheibe relativen, nicht gleichförmigen Bewegung des Laserstrahls sind auch nierenförmige Ausformungen der Vertiefungen herstellbar. Dabei ist die Vorzugsrichtung dieser nierenförmigen Ausformungen vorzugsweise in radialer Richtung ausrichtbar. Auf diese Weise ist eine weiter verbesserte Haftung erreichbar. Aber auch rechteckförmige Ausformungen sind in radialer Richtung orientierbar zur Verbesserung der Haftung. Statt der kreisförmigen Ausformung sind quadratische Ausformungen realisierbar, wobei die scharfkantigen Innenecken des jeweiligen Quadrats eine verbesserte Haftung für den Klebstoff bewirken.

Bei einer vorteilhaften Ausgestaltung sind die ersten Vertiefungen jeweils oval ausgeführt und dabei in radialer Richtung ausgerichtet,
insbesondere also die längste Ausdehnung der ersten Vertiefungen in radialer Richtung und die kürzeste Ausdehnung in Umfangsrichtung ausgerichtet ist. Von Vorteil ist dabei, dass unabhängig von der Drehrichtung eine verbesserte Haftung des Klebstoffs erreichbar ist und somit eine verbesserte Verbindung.

Bei einer vorteilhaften Ausgestaltung sind die ersten Vertiefungen in Umfangsrichtung und/oder in radialer Richtung regelmäßig voneinander beabstandet. Von Vorteil ist dabei, dass eine gleichförmige, insbesondere also vom Umfangswinkel unabhängige, Bremskraft erzeugbar ist.

Bei einer vorteilhaften Ausgestaltung weisen die beiden Oberflächenbereiche jeweils nicht nur die ersten Vertiefungen, sondern auch zweite Vertiefungen auf,
wobei die zweiten Vertiefungen als in radialer Richtung sich erstreckende Rillen oder Riefen ausgeführt sind,
insbesondere wobei der von den ersten Vertiefungen überdeckte Radialabstandsbereich von dem von den zweiten Vertiefungen überdeckten Radialabstandsbereich umfasst ist und der nicht von dem von den ersten Vertiefungen überdeckte Radialabstandsbereich radial innerhalb des von den ersten Vertiefungen überdeckten Radialabstandsbereichs angeordnet ist,
insbesondere wobei als erste Vertiefungen kreissymmetrische, insbesondere punktförmige, Vertiefungen vorgesehen sind. Von Vorteil ist dabei, dass mittels der Radialstrahlenartigen zweiten Vertiefungen die Klebeverbindung eine verbesserte Haftung erreichbar ist, jedoch ist mit zunehmendem Radialabstand der Abstand zwischen in Umfangsrichtung benachbarten Radialstrahlenförmigen Vertiefungen in Umfangsrichtung zunehmend. Somit ist mittels der zweiten Vertiefungen auch in diesen in Umfangsrichtung angeordneten Zwischenbereichen die Klebeverbindung verbesserbar, da dort zweite Vertiefungen anordenbar sind.

Bei einer vorteilhaften Ausgestaltung sind die Scheiben aus Aluminium gefertigt. Von Vorteil ist dabei, dass eine kostengünstige Herstellung ausführbar ist. Außerdem ist beim Bremsen entstehende Wärme aufspreizbar. Darüber hinaus weist der Bremsbelagträger ein geringes Trägheitsmoment auf.

Bei einer vorteilhaften Ausgestaltung ist das Nabenteil eine Stahlnabe. Von Vorteil ist dabei, dass eine stabile kostengünstige Bremsanordnung herstellbar ist.

Bei einer vorteilhaften Ausgestaltung weist das Nabenteil eine Innenverzahnung auf. Von Vorteil ist dabei, dass das Nabenteil in axialer Richtung auf der Welle verschiebbar ist.

**Erfindungsgemäß** ist axial zwischen den beiden Scheiben ein Dämpfungsmittel angeordnet,
insbesondere wobei das Dämpfungsmittel ein Noppenblech, insbesondere ein Blechteil mit an ihm ausgeformten Noppen, ist oder ein Papierstück oder ein Kunststoffteil. Von Vorteil ist dabei, dass eine Geräuschverminderung beim Bremsen erreichbar ist und die über den ersten Reibbelag eingeleiteten Bremskräfte separiert sind von der Klebeverbindung des anderen Reibbelags.

Bei einer vorteilhaften Ausgestaltung sind das Nabenteil und die Scheiben konzentrisch zueinander angeordnet,
wobei die Scheiben auf dem Nabenteil aufgenommen sind und die Scheiben gleichartig ausgeführt sind sowie direkt einander berührend angeordnet sind,
insbesondere wobei die Scheiben als Lochscheiben, insbesondere als Hohlzylinder, ausgeführt sind. Von Vorteil ist dabei, dass eine einfache Herstellung ermöglicht ist.
Bei einer vorteilhaften Ausgestaltung weist die erste Scheibe eine mittels Laser erzeugte Codierung in einem Bereich der Oberfläche der ersten Scheibe auf, welcher radial beabstandet ist vom Oberflächenbereich der ersten Scheibe,
wobei der vom Bereich überdeckte Radialabstandsbereich radial innerhalb des vom Oberflächenbereich überdeckten Radialabstandsbereichs angeordnet ist,
insbesondere wobei die Codierung einen DataMatrix-Code aufweist. Von Vorteil ist dabei, dass im gleichen Herstellschritt Vertiefungen und Codierung erzeugbar ist.

Wichtige Merkmale bei der elektromagnetisch betätigbaren Bremsanordnung mit Trägerscheibenanordnung sind, dass die Trägerscheibenanordnung als Bremsbelagträger der Bremsanordnung fungiert,
wobei die Bremsanordnung
   - eine Ankerscheibe
   - eine Spule
   - einen Magnetträger
   - ein eine Bremsfläche aufweisendes Teil
   - eine abbremsbare Welle
   aufweist,
wobei die abbremsbare Welle eine Außenverzahnung aufweist oder mit einem eine Außenverzahnung aufweisenden Bauteil drehfest verbunden ist,
wobei die Innenverzahnung des Nabenteils derart mit der Außenverzahnung im Eingriff ist, dass das Nabenteil in Umfangsrichtung mit der Welle formschlüssig verbunden und in axialer Richtung auf der Welle verschiebbar angeordnet ist,
wobei die Ankerscheibe mit dem Magnetträger in Umfangsrichtung formschlüssig verbunden und in axialer Richtung relativ zum Magnetträger verschiebbar angeordnet ist, insbesondere mittels mit dem Magnetträger verbundenen Führungsbolzen,
wobei die Spule im Magnetträger aufgenommen ist, insbesondere wobei die als Ringspule ausgeführte Spule in einer Ringnut des Magnetträgers aufgenommen ist,
wobei die Ankerscheibe axial zwischen dem Magnetträger und dem Bremsbelagträger angeordnet ist,
wobei der Bremsbelagträger axial zwischen der Ankerscheibe und dem die Bremsfläche aufweisenden Teil angeordnet ist.

Von Vorteil ist dabei, dass die Bremsanordnung bei einer abzubremsenden Welle mit hoher Drehzahl verwendbar ist. Dabei ist die im Bremsbelagträger angeordnete Klebeverbindung verbessert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

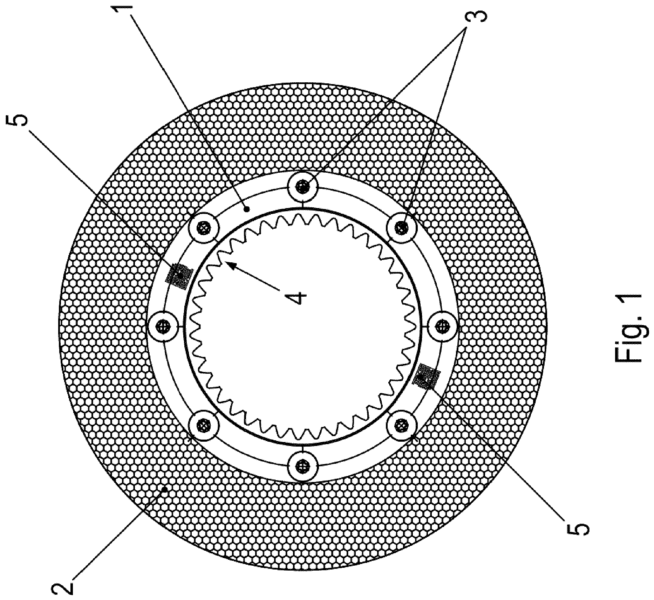

In der Figur 1 ist eine Vorderansicht einer Trägerscheibenanordnung dargestellt.

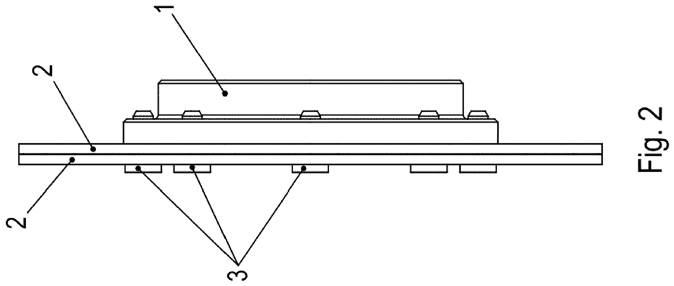

In der Figur 2 ist ein Querschnitt durch die Trägerscheibenanordnung gezeigt.

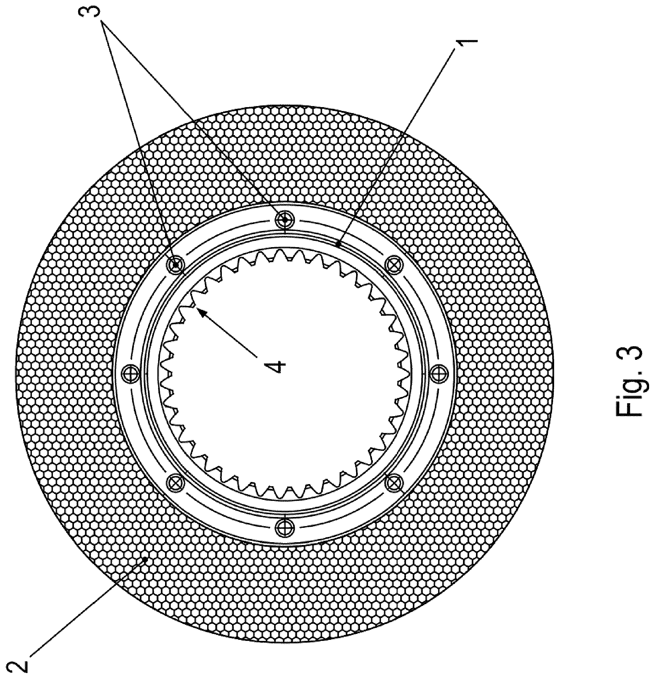

In der Figur 3 ist die zugehörige Hinteransicht der Trägerscheibenanordnung dargestellt.

Wie in den Figuren dargestellt, weist die Trägerscheibenanordnung eine mit einer Innenverzahnung 4 und axial durchgehenden Gewindebohrungen für Schrauben 3 auf und versehene Stahlnabe 1 auf.

Dabei sind zwei aneinander anliegende, koaxial zueinander angeordnete, Scheiben 3 mittels der Schrauben 3 mit der Stahlnabe 1 schraubverbunden.

Die Schrauben 3 sind axial gerichtet, in die Gewindebohrungen eingeschraubt und ragen teilweise aus der Stahlnabe 1 heraus.

Vorzugsweise sind die Scheiben 2 aus Aluminium ausgeführt.

Die Scheiben 2 sind jeweils hohlzylindrisch ausgeführt, wobei die axiale Richtung parallel zur Zylinderachse dieses jeweiligen hohlzylindrischen Bereichs ausgerichtet ist.

Die Scheiben sind an ihren jeweiligen Außenseiten mit einem Laser bearbeitet, so dass sie Vertiefungen aufweisen. Somit weist die Trägerscheibenanordnung an ihrer axialen Vorderseite und Hinterseite jeweils einen vom Laser bearbeiteten Oberflächenbereich auf.

Der an der Vorderseite, an einer ersten der Scheiben 2 angeordnete Oberflächenbereich ist vorzugsweise ein Kreisring.

Der an der Hinterseite, an der anderen Scheibe 2 angeordnete Oberflächenbereich ist vorzugsweise ebenfalls ein Kreisring.

Auf diese Weise sind Reibbeläge klebeverbindbar mit den Scheiben 2, wobei die bearbeiteten Oberflächenbereiche eine besonders gute Haftung der Klebeverbindung, insbesondere des Klebstoffs, bewirken. Der Klebstoff ist mittels der Vertiefungen besser angebunden als an einen Oberflächenbereich ohne Vertiefungen.

Die Vertiefungen sind jeweils punktartig ausgeformt, da bei der Bearbeitung auf jede der Vertiefungen ein jeweiliger Laserpuls auf den jeweiligen Mittelpunkt der jeweiligen Vertiefung gerichtet einwirkt. Jede der Vertiefungen weist also eine Drehsymmetrie auf zu ihrer jeweiligen Mittelachse.

Eine erste der Scheiben 2 weist eine mit dem Laser auf die Oberfläche der Scheibe 2 aufgebrachte Codierung 5 auf. Somit wird mittels der Laserbearbeitung als einem einzigen Bearbeitungsverfahrensschritt nicht nur der durch Vertiefungen aufgeraute Oberflächenberiech erzeugt, sondern auch der mit der Codierung 5 versehene Beriech.

Die Codierung 5 enthält vorzugsweise Typenschilddaten.

Vorteiligerweise ist die Codierung 5 in einem Radialabstandsbereich angebracht der radial beabstandet ist von demjenigen Radialabstandsbereich, welcher vom mit Laser bearbeiteten Oberflächenbereich überdeckt ist.

Die Vertiefungen sind vorteiligerweise in Umfangsrichtung regelmäßig voneinander beabstandet. Somit wird beim Bremsen von den auf die Scheiben aufgeklebten Reibbelägen ein im Wesentliches konstantes Bremsmoment erzeugt. Ebenso ist eine regelmäßige Beabstandung in radialer Richtung vorteilhaft.

Wie beschrieben, werden die Reibbeläge klebeverbunden mit den Scheiben 2, welche aus Aluminium gefertigt sind. Da die Scheiben 2 mittels der Schrauben 3 mit der innenverzahnten Stahlnabe 1 schraubverbunden sind, ist dieser so gebildete Bremsbelagträger auf einer Welle aufsteckbar, welche eine entsprechende Außenverzahnung aufweist. Somit sind die Innenverzahnung und Außenverzahnung miteinander in Eingriff und die Welle ist mit dem Bremsbelagträger in Umfangsrichtung formschlüssig verbunden. In axialer Richtung, also in Richtung der Drehachse der Welle, ist der Bremsbelagträger verschiebbar angeordnet auf der Welle.

Die Welle ist mittels eines Lagers in einem Gehäuseteil drehbar gelagert angeordnet. Das Gehäuseteil ist mit einem Magnetträger drehfest verbunden, insbesondere mittels axial gerichtet angeordneter Bolzen.

Der Magnetträger ist aus ferromagnetischem Material, wie Stahlguss, und weist an seiner dem Bremsbelagträger zugewandten Seite eine Ringnut auf, in welcher eine Ringspule, insbesondere Bremsspule, aufgenommen ist. Vorzugsweise ist diese Ringspule in der Ringnut von Vergussmasse umgeben, insbesondere gehalten.

Axial zwischen Bremsbelagträger und Ringspule ist eine Ankerscheibe angeordnet, welche drehfest mit Magnetträger verbunden ist und axial bewegbar angeordnet ist. Hierzu sind die Bolzen durch durch die Ankerscheiben axial durchgehende Ausnehmungen durchgeführt. Die Bolzen sind dabei teilweise eingesteckt in axial gerichtete Bohrlöcher des Magnetträgers.

Ein am Magnetträger abgestütztes Federelement drückt die Ankerscheibe auf einen ersten Reibbelag des Bremsbelagträgers, insbesondere wenn die Ringspule unbestromt, wobei der Bremsbelagträger mit seinem zweiten Reibbelag gegen eine an einem Gehäuseteil ausgebildete Bremsfläche gedrückt wird. Dabei ist dieser Reibbelag auf der der Ankerscheibe axial zugewandten Seite des Bremsbelagträgers angeordnet. Bei Bestromung der Ringspule hingegen wird die Ankerscheibe zur Ringspule hingezogen, wobei die Ankerscheibe die Federkraft überwindet.

Bei weiteren erfindungsgemäßen Ausführungsbeispielen ist die Außenverzahnung nicht direkt in den Außenumfang der Welle eingearbeitet, sondern als Verzahnung eines Verzahnungsteils, insbesondere Aufsteckritzels, ausgeführt, wobei die Welle mit dem Verzahnungsteil drehfest verbunden ist, insbesondere mittels Passfederverbindung.

Bei Stromausfall fällt die hier beschriebene Bremsanordnung ein und bei Bestromung der Ringspule wird ein Lüften der Bremse bewirkt.

Diese den Bremsbelagträger aufweisende Bremsanordnung ist in oder an einem Elektromotor vorsehbar. Dabei ist die Welle mit der Rotorwelle des Elektromotors drehfest verbunden oder einstückig, also einteilig, ausgeführt.

Bei weiteren erfindungsgemäßen Ausführungsbeispielen berühren sich die beiden Scheiben nicht direkt, sondern sind über ein axial zwischengeordnetes Dämpfungsmittel beabstandet. Vorzugsweise ist dessen Wandstärke geringer als die Wandstärke jeder der beiden Scheiben. Vorzugsweise ist als Dämpfungsmittel ein Noppenblech, ein Kunststoffteil oder ein Papier, insbesondere NOMEX-Papier, verwendbar.

Bei weiteren erfindungsgemäßen Ausführungsbeispielen sind die Vertiefungen, insbesondere die auf demselben Radialabstand angeordneten Vertiefungen, in Umfangsrichtung nicht regelmäßig voneinander beabstandet. Auf diese Weise wird die Schwingneigung des die Trägerscheibenanordnung aufweisenden Gesamtsystems beim Bremsen reduziert, da nicht eine einzige Schwingung anregende Frequenz auftritt sondern mehrere Frequenzen mit kleinerer Amplitude. Selbst wenn das Gesamtsystem eine risikoreiche Resonanzfrequenz aufweisen sollte, wird somit nicht genügend Energie in die zugehörige Anregungsfrequenz eingetragen, um gefährlich starke Amplituden der Resonanzschwingung zu bewirken. Somit ist also auch die Geräuschemission verringerbar.

Bei weiteren erfindungsgemäßen Ausführungsbeispielen werden statt der punktförmigen ovalen Vertiefungen durch den Laser erzeugt, wobei die ovalen Vertiefungen radial gerichtet sind, also in radialer Richtung sich weiter erstrecken als in Umfangsrichtung. Vorzugsweise sind in einem Radialabstandsberiech, der radial innerhalb des von den ovalen Vertiefungen auch überdeckten Radialabstandsbereichs angeordnet ist, auch punktförmige Vertiefungen angeordnet.

Somit ist die Haftung auch bei Einwirkung von Bremskräften verbessert.

Bei weiteren erfindungsgemäßen Ausführungsbeispielen werden radial gerichtete Riefen oder Rillen durch den Laser erzeugt. Zusätzlich sind noch punktförmige Vertiefungen vorhanden, insbesondere im radial äußeren Bereich des jeweiligen Oberflächenbereichs.

Bei weiteren erfindungsgemäßen Ausführungsbeispielen sind die Vertiefungen nicht kreisrund oder oval, sondern nierenförmig, quadratisch oder rechteckförmig. Auf diese Weise ist abhängig vom Material des Reibbelags und des zwischen Reibbelag und Scheibe angeordneten Klebstoffs eine weiter verbesserte Haftung erreichbar

Bei weiteren erfindungsgemäßen Ausführungsbeispielen sind die Vertiefungen kreuzförmig oder doppelkreuzförmig, insbesondere wobei das oder die Kreuze nicht-rechtwinklig sind.

### Bezugszeichenliste

- 1: Stahlnabe mit Innenverzahnung 4 und Gewindebohrungen für Schrauben 3
- 2: Aluminium-Scheibe
- 3: Schrauben
- 4: Innenverzahnung
- 5: Codierung, insbesondere Data-Matrixcode

## Patentansprüche

1. Trägerscheibenanordnung für Bremsanordnung,
wobei die Trägerscheibenanordnung ein Nabenteil (1) zumindest einen Reibbelag und eine Scheibe (2) aufweist,
wobei die Scheibe mit dem Nabenteil verbunden ist, insbesondere mittels axial gerichteter Schrauben (3),
**wobei** die Scheibe einen erste Vertiefungen aufweisenden Oberflächenbereich aufweist, wobei am Oberflächenbereich der Scheibe ein erster Reibbelag aufgeklebt ist und/oder klebeverbunden ist mit der Scheibe,
**dadurch gekennzeichnet, dass**
**die ersten Vertiefungen mittels Laser hergestellt und/oder bearbeitet sind.**

2. Trägerscheibenanordnung für Bremsanordnung,
wobei die Trägerscheibenanordnung ein Nabenteil (1), zwei Reibbeläge und zwei Scheiben (2) aufweist,
wobei die Scheiben mit dem Nabenteil verbunden sind, insbesondere mittels axial gerichteter Schrauben (3),
**dadurch gekennzeichnet, dass**
eine erste der beiden Scheiben einen erste Vertiefungen aufweisenden Oberflächenbereich aufweist, welcher auf der von der zweiten Scheibe abgewandten Seite der ersten Scheibe angeordnet ist,
wobei die zweite der beiden Scheiben ebenfalls einen erste Vertiefungen aufweisenden Oberflächenbereich aufweist, welcher auf der von der ersten Scheibe abgewandten Seite der zweiten Scheibe angeordnet ist,
wobei am Oberflächenbereich der ersten der beiden Scheiben ein erster Reibbelag aufgeklebt ist und/oder klebeverbunden ist mit der ersten Scheibe,
wobei am Oberflächenbereich der zweiten der beiden Scheiben ein zweiter Reibbelag aufgeklebt ist und/oder klebeverbunden ist mit der zweiten Scheibe,
**wobei die ersten Vertiefungen mittels Laser hergestellt und/oder bearbeitet sind, wobei axial zwischen den beiden Scheiben ein Dämpfungsmittel angeordnet ist.**

3. **Trägerscheibenanordnung nach einem der Ansprüche 1 oder 2,**
**dadurch gekennzeichnet, dass**
die ersten Vertiefungen jeweils geometrisch gleichartig ausgeformt sind, insbesondere jeweils gleich groß.

4. Trägerscheibenanordnung nach mindestens einem der vorangegangenen Ansprüche, **dadurch gekennzeichnet, dass**
die ersten Vertiefungen jeweils kreisförmig sind, quadratisch, nierenförmig oder rechteckförmig
oder dass die ersten Vertiefungen jeweils kreuzförmig oder doppelkreuzförmig ausgeformt sind.

5. Trägerscheibenanordnung nach einem der Ansprüche 1 **oder 2,**
**dadurch gekennzeichnet, dass**
die ersten Vertiefungen jeweils oval ausgeführt sind und dabei in radialer Richtung ausgerichtet sind,
insbesondere also die längste Ausdehnung der ersten Vertiefungen in radialer Richtung und die kürzeste Ausdehnung in Umfangsrichtung ausgerichtet ist.

6. Trägerscheibenanordnung nach mindestens einem der vorangegangenen Ansprüche,
**dadurch gekennzeichnet, dass**
die ersten Vertiefungen in Umfangsrichtung und/oder in radialer Richtung regelmäßig voneinander beabstandet sind.

7. Trägerscheibenanordnung nach mindestens einem der vorangegangenen Ansprüche,
**dadurch gekennzeichnet, dass**
die Nabe und die Scheibe einstückig, also einteilig ausgebildet sind, insbesondere aus Stahl.

8. Trägerscheibenanordnung nach mindestens einem der vorangegangenen Ansprüche, **dadurch gekennzeichnet, dass**
axial zwischen den beiden Scheiben ein Dämpfungsmittel angeordnet ist,
insbesondere wobei das Dämpfungsmittel ein Noppenblech, insbesondere ein Blechteil mit an ihm ausgeformten Noppen, ist oder ein Papierstück oder ein Kunststoffteil.

9. Trägerscheibenanordnung nach mindestens einem der vorangegangenen Ansprüche, **dadurch gekennzeichnet, dass**
die beiden Oberflächenbereiche jeweils nicht nur die ersten Vertiefungen, sondern auch zweite Vertiefungen aufweisen,
wobei die zweiten Vertiefungen als in radialer Richtung sich erstreckende Rillen oder Riefen ausgeführt sind,
insbesondere wobei der von den ersten Vertiefungen überdeckte Radialabstandsbereich von dem von den zweiten Vertiefungen überdeckten Radialabstandsbereich umfasst ist und der nicht von dem von den ersten Vertiefungen überdeckte Radialabstandsbereich radial innerhalb des von den ersten Vertiefungen überdeckten Radialabstandsbereichs angeordnet ist,
insbesondere wobei als erste Vertiefungen kreissymmetrische, insbesondere punktförmige, Vertiefungen vorgesehen sind.

10. Trägerscheibenanordnung nach mindestens einem der vorangegangenen Ansprüche,
**dadurch gekennzeichnet, dass**
die Scheiben aus Aluminium gefertigt sind
und/oder dass
das Nabenteil eine Stahlnabe ist.

11. Trägerscheibenanordnung nach mindestens einem der vorangegangenen Ansprüche,
**dadurch gekennzeichnet, dass**
das Nabenteil eine Innenverzahnung aufweist.

12. Trägerscheibenanordnung nach mindestens einem der vorangegangenen Ansprüche,
**dadurch gekennzeichnet, dass**
das Nabenteil und die Scheiben konzentrisch zueinander angeordnet sind,
wobei die Scheiben auf dem Nabenteil aufgenommen sind und die Scheiben gleichartig ausgeführt sind sowie direkt einander berührend angeordnet sind,
insbesondere wobei die Scheiben als Lochscheiben, insbesondere als Hohlzylinder, ausgeführt sind.

13. Trägerscheibenanordnung nach mindestens einem der vorangegangenen Ansprüche, **dadurch gekennzeichnet, dass**
die erste Scheibe eine mittels Laser erzeugte Codierung in einem Bereich der Oberfläche der ersten Scheibe aufweist, welcher radial beabstandet ist vom Oberflächenbereich der ersten Scheibe,
wobei der vom Bereich überdeckte Radialabstandsbereich radial innerhalb des vom Oberflächenbereich überdeckten Radialabstandsbereichs angeordnet ist,
insbesondere wobei die Codierung einen DataMatrix-Code aufweist.

14. Elektromagnetisch betätigbare Bremsanordnung mit Trägerscheibenanordnung nach mindestens einem der vorangegangenen Ansprüche,
wobei die Trägerscheibenanordnung als Bremsbelagträger der Bremsanordnung fungiert,
wobei die Bremsanordnung
- eine Ankerscheibe
- eine Spule
- einen Magnetträger
- ein eine Bremsfläche aufweisendes Teil
- eine abbremsbare Welle
aufweist,
**dadurch gekennzeichnet, dass**
die abbremsbare Welle eine Außenverzahnung aufweist oder mit einem eine Außenverzahnung aufweisenden Bauteil drehfest verbunden ist,
wobei die Innenverzahnung des Nabenteils derart mit der Außenverzahnung im Eingriff ist, dass das Nabenteil in Umfangsrichtung mit der Welle formschlüssig verbunden und in axialer Richtung auf der Welle verschiebbar angeordnet ist,
wobei die Ankerscheibe mit dem Magnetträger in Umfangsrichtung formschlüssig verbunden und in axialer Richtung relativ zum Magnetträger verschiebbar angeordnet ist, insbesondere mittels mit dem Magnetträger verbundenen Führungsbolzen,
wobei die Spule im Magnetträger aufgenommen ist, insbesondere wobei die als Ringspule ausgeführte Spule in einer Ringnut des Magnetträgers aufgenommen ist,
wobei die Ankerscheibe axial zwischen dem Magnetträger und dem Bremsbelagträger angeordnet ist,
wobei der Bremsbelagträger axial zwischen der Ankerscheibe und dem die Bremsfläche aufweisenden Teil angeordnet ist.

## Claims

1. A carrier disc arrangement for a brake arrangement,
wherein the carrier disc arrangement has a hub part (1), at least one friction lining and a disc (2), wherein the disc is connected to the hub part, in particular by means of axially-directed screws (3),
wherein the disc has a surface region having first depressions,
wherein a first friction lining is stuck on the surface region of the disc and/or is adhesively-bonded to the disc,
**characterised in that**
the first depressions are produced and/or worked by laser.

2. A carrier disc arrangement for a brake arrangement,
wherein the carrier disc arrangement has a hub part (1), two friction linings and two discs (2),
wherein the discs are connected to the hub part, in particular by means of axially-directed screws (3),
**characterised in that**
a first of the two discs has a surface region having first depressions, which surface region is arranged at that side of the first disc remote from the second disc,
wherein the second of the two discs likewise has a surface region having first depressions, which surface region is arranged at that side of the second disc remote from the first disc,
wherein a first friction lining is stuck on the surface region of the first of the two discs and/or is adhesively-bonded to the first disc,
wherein a second friction lining is stuck on the surface region of the second of the two discs and/or is adhesively-bonded to the second disc,
wherein the first depressions are produced and/or worked by laser,
wherein a damping means is arranged axially between the two discs.

3. A carrier disc arrangement according to one of claims 1 and 2,
**characterised in that** the first depressions are in each case geometrically alike in form, in particular are the same size in each case.

4. A carrier disc arrangement according to at least one of the preceding claims,
**characterised in that**
the first depressions are in each case circular, square, kidney-shaped or rectangular or **in that** the first depressions are in each case in the shape of a cross or a double cross.

5. A carrier disc arrangement according to one of claims 1 and 2,
**characterised in that**
the first depressions are in each case oval and as well are oriented in a radial direction,
in particular therefore the longest extension of the first depressions is oriented in a radial direction and the shortest extension in a circumferential direction.

6. A carrier disc arrangement according to at least one of the preceding claims,
**characterised in that**
the first depressions are regularly spaced apart from one another in a circumferential direction and/or in a radial direction.

7. A carrier disc arrangement according to at least one of the preceding claims,
**characterised in that**
the hub and the disc are in one piece, therefore one-part, in particular are made of steel.

8. A carrier disc arrangement according to at least one of the preceding claims, **characterised in that**
a damping means is arranged axially between the two discs,
in particular wherein the damping means is a studded plate, in particular a sheet-metal part with studs formed thereon, or is a piece of paper or a plastics part.

9. A carrier disc arrangement according to at least one of the preceding claims,
**characterised in that**
the two surfaces regions have in each case not only the first depressions but also second depressions,
wherein the second depressions are in the form of channels or grooves extending in a radial direction,
in particular wherein the radial spacing region covered by the first depressions is encompassed by the radial spacing region covered by the second depressions and the radial spacing region not covered by the first depressions is arranged radially within the radial spacing region covered by the first depressions,
in particular wherein circular-symmetrical, in particular punctiform, depressions are provided as first depressions.

10. A carrier disc arrangement according to at least one of the preceding claims,
**characterised in that**
the discs are manufactured from aluminium
and/or **in that**
the hub part is a steel hub.

11. A carrier disc arrangement according to at least one of the preceding claims,
**characterised in that**
the hub part has internal toothing.

12. A carrier disc arrangement according to at least one of the preceding claims,
**characterised in that**
the hub part and the discs are arranged concentrically to one another,
wherein the discs are received on the hub part and the discs are alike
in design and are arranged directly contacting one another,
in particular wherein the discs are in the form of perforated discs, in particular hollow cylinders.

13. A carrier disc arrangement according to at least one of the preceding claims,
**characterised in that**
the first disc has coding, generated by laser, in a region of the surface of the first disc, which region is radially spaced apart from the surface region of the first disc,
wherein the radial spacing region covered by the region is arranged radially within the radial spacing region covered by the surface region,
in particular wherein the coding has a data matrix code.

14. An electromagnetically actuatable brake arrangement having a carrier disc arrangement according to at least one of the preceding claims,
wherein the carrier disc arrangement acts as a brake lining carrier of the brake arrangement,
wherein the brake arrangement has
- an armature plate
- a coil
- a magnet carrier
- a part having a braking surface
- a brakeable shaft
**characterised in that**
the brakeable shaft has external toothing or is connected in a rotationally-fixed manner to a component part having external toothing,
wherein the internal toothing of the hub part engages the external toothing in such a manner that the hub part is connected to the shaft in a form-locked manner in a circumferential direction and is displaceably arranged on the shaft in an axial direction,
wherein the armature plate is connected to the magnet carrier in a form-locked manner in a circumferential manner and is displaceably arranged relative to the magnet carrier in an axial direction, in particular by means of guide bolts connected to the magnet carrier,
wherein the coil is received in the magnet carrier, in particular wherein the coil designed as a toroidal coil is received in an annular groove of the magnet carrier,
wherein the armature plate is arranged axially between the magnet carrier and the brake lining carrier,
wherein the brake lining carrier is arranged axially between the armature plate and the part having the braking surface.

## Revendications

1. Système de disques de support pour un système de freinage,
le système de disques de support comprenant une partie moyeu (1), au moins une garniture de friction et un disque (2),
le disque étant relié à la partie moyeu, notamment au moyen de vis (3) dirigées axialement,
le disque comprenant une zone de surface comprenant des premiers creux, une première garniture de friction étant collée sur la zone de surface du disque et/ou étant reliée par collage au disque,
**caractérisé en ce que**
les premiers creux sont produits et/ou usinés au moyen d'un laser.

2. Système de disques de support pour un système de freinage,
le système de disques de support comprenant une partie moyeu (1), deux garnitures de friction et deux disques (2),
les disques étant reliés à la partie moyeu, notamment au moyen de vis (3) dirigées axialement,
**caractérisé en ce que**
un premier des deux disques comprend une zone de surface comprenant des premiers creux, qui est agencée sur le côté du premier disque détourné du deuxième disque,
le deuxième des deux disques comprenant également une zone de surface comprenant des premiers creux, qui est agencée sur le côté du deuxième disque détourné du premier disque,
une première garniture de friction étant collée sur la zone de surface du premier des deux disques et/ou étant reliée par collage au premier disque,
une deuxième garniture de friction étant collée sur la zone de surface du deuxième des deux disques et/ou étant reliée par collage au deuxième disque,
les premiers creux étant produits et/ou usinés au moyen d'un laser,
un moyen d'amortissement étant agencé axialement entre les deux disques.

3. Système de disques de support selon l'une quelconque des revendications 1 ou 2, **caractérisé en ce que**
les premiers creux sont chacun formés de manière géométriquement identique, notamment sont chacun de même taille.

4. Système de disques de support selon au moins l'une quelconque des revendications précédentes, **caractérisé en ce que**
les premiers creux sont chacun circulaires, carrés, en forme de rein ou rectangulaires,
ou **en ce que** les premiers creux sont chacun en forme de croix ou en forme de double croix.

5. Système de disques de support selon l'une quelconque des revendications 1 ou 2, **caractérisé en ce que**
les premiers creux sont chacun réalisés sous forme ovale, et sont dirigés dans la direction radiale, c'est-à-dire que notamment l'étendue la plus longue des premiers creux est dirigée dans la direction radiale et l'étendue la plus courte dans la direction circonférentielle.

6. Système de disques de support au moins selon l'une quelconque des revendications précédentes, **caractérisé en ce que**
les premiers creux sont espacés régulièrement les uns des autres dans la direction circonférentielle et/ou dans la direction radiale.

7. Système de disques de support selon au moins l'une quelconque des revendications précédentes, **caractérisé en ce que**
le moyeu et le disque sont configurés d'un seul tenant, c'est-à-dire en une seule pièce, notamment en acier.

8. Système de disques de support selon au moins l'une quelconque des revendications précédentes, **caractérisé en ce que**
un moyen d'amortissement est agencé axialement entre les deux disques,
le moyen d'amortissement étant notamment une tôle à picots, notamment une partie en tôle sur laquelle sont formés des picots, ou un morceau de papier ou une partie en matière plastique.

9. Système de disques de support selon au moins l'une quelconque des revendications précédentes, **caractérisé en ce que**
les deux zones de surface comprennent chacune non seulement les premiers creux, mais également des deuxièmes creux,
les deuxièmes creux étant réalisés sous la forme de sillons ou de cannelures s'étendant dans la direction radiale,
la zone d'espacement radial recouverte par les premiers creux étant notamment comprise par la zone d'espacement radial recouverte par les deuxièmes creux, et la zone d'espace radial non recouverte par les premiers creux étant agencée radialement à l'intérieur de la zone d'espacement radial recouverte par les premiers creux, des creux à symétrie circulaire, notamment de forme ponctuelle, étant notamment prévus en tant que premiers creux.

10. Système de disques de support selon au moins l'une quelconque des revendications précédentes, **caractérisé en ce que**
les disques sont fabriqués en aluminium,
et/ou **en ce que**
la partie moyeu est un moyeu en acier.

11. Système de disques de support selon au moins l'une quelconque des revendications précédentes, **caractérisé en ce que**
la partie moyeu comprend une denture intérieure.

12. Système de disques de support selon au moins l'une quelconque des revendications précédentes, **caractérisé en ce que**
la partie moyeu et les disques sont agencés concentriquement les uns des autres,
les disques étant reçus sur la partie moyeu et les disques étant réalisés de manière identique et étant agencés en contact direct les uns avec les autres,
les disques étant notamment réalisés sous la forme de disques perforés, notamment sous la forme de cylindres creux.

13. Système de disques de support selon au moins l'une quelconque des revendications précédentes, **caractérisé en ce que**
le premier disque comprend un codage produit par laser dans une zone de la surface du premier disque, qui est espacée radialement de la zone de surface du premier disque,
la zone d'espacement radial recouverte par la zone étant agencée radialement à l'intérieur de la zone d'espacement radial recouverte par la zone de surface, le codage comprenant notamment un code de matrice de données.

14. Système de freinage pouvant être actionné électromagnétiquement équipé d'un système de disques de support selon au moins l'une quelconque des revendications précédentes,
le système de disques de support servant de support de garniture de frein du système de freinage,
le système de freinage comprenant :
- un disque d'induit,
- une bobine,
- un support magnétique,
- une partie comprenant une surface de freinage,
- un arbre pouvant être freiné,
**caractérisé en ce que**
l'arbre pouvant être freiné comprend une denture extérieure ou est relié de manière immobile en rotation à un composant comprenant une denture extérieure,
la denture intérieure de la partie moyeu étant en prise avec la denture extérieure de telle sorte que la partie moyeu est relié par accouplement de forme dans la direction circonférentielle avec l'arbre et est agencée de manière déplaçable sur l'arbre dans la direction axiale,
le disque d'induit étant relié par accouplement de forme dans la direction circonférentielle avec le support magnétique et étant agencé de manière déplaçable par rapport au support magnétique dans la direction axiale, notamment au moyen de boulons de guidage reliés au support magnétique,
la bobine étant reçue dans le support magnétique, la bobine réalisée en tant que bobine annulaire étant notamment reçue dans une rainure annulaire du support magnétique,
le disque d'induit étant agencé axialement entre le support magnétique et le support de garniture de frein, le support de garniture de frein étant agencé axialement entre le disque d'induit et la partie comprenant la surface de freinage.
